# EUROPÄISCHE PATENTSCHRIFT

(11) **EP 1 245 318 B1**
(45) Veröffentlichungstag und Bekanntmachung des Hinweises auf die Patenterteilung: **13.11.2002**
(21) Anmeldenummer: 01107042.2
(22) Anmeldetag: 21.03.2001
(51) Int. Cl.: B23D 31/00

(54) **Ablängvorrichtung für Wuchtgewichte**
Apparatus for cutting to length balancing weights
Dispositif pour couper à longueur des masselottes d'équilibrage

(43) Veröffentlichungstag der Anmeldung: 02.10.2002
(73) Patentinhaber: Bettchen, Uwe, 42579 Heiligenhaus (DE); Bettchen, David, 42579 Heiligenhaus (DE)
(72) Erfinder: Bettchen, Uwe, 42579 Heiligenhaus (DE); Bettchen, David, 42579 Heiligenhaus (DE)
(74) Vertreter: Kern, Wolfgang

(56) Entgegenhaltungen:
- EP-A- 0 058 423
- WO-A-00/25970
- DE-A- 3 924 636
- DE-A- 4 431 878

## Beschreibung

Die Erfindung betrifft eine Ablängvorrichtung für Wuchtgewichte gemäß dem Oberbegriff des Anspruchs 1.

Bei einer bekannten Vorrichtung dieser Art (DE 39 24 636) werden die Wuchtgewichte von einem Strang abgetrennt, nachdem der Strang über ein Führungsbauteil gelaufen ist, das eine einstellbare, vorbestimmt gekrümmte, insbesondere einer vorgegebenen Felgenkrümmung des Kraftfahrzeugrades anpaßbare Führungs- und Verformungsbahn bildet, in die der von einer Vorratsrolle abgenommene Bleistrang zunächst geradlinig hineinläuft, um dann in dieser Führungs- und Verformungsbahn gekrümmt zu werden.

Die Ausbildung dieser Führungs- und Verformmgsbahn durch entsprechende Bauteile ist jedoch aufwendig und außerdem muß der von der Vorratsrolle abgerollte Bleistrang zunächst geradegerichtet werden, um danach in der genannten Führungsbahn eine der Felgenkrümmung angepaßte Krümmung zu erhalten.

Für diese Vorrichtung ist somit ein relativ hochbauendes Gehäuse erforderlich, dessen unterer Teil die Vorratsspule aufnimmt und dessen oberer Teil mit einer Vielzahl von Führungsbauteilen in Form von einander gegenüberliegenden Führungsrollen oder Rollenpaaren, die zwischen sich eine Führungs- und Verformungsbahn bilden, versehen ist, derart, daß der Endbereich des Stranges eine vorbestimmte Krümmung erhält. Die Auslegung der Führungsrollen oder sonstiger Führungsbauteile ist dabei an die verlangten Felgenkrümmungen anzupassen, was dadurch geschieht, daß die drehbar gelagerten Führungsrollen Achsen haben, die in Schlitzen oder Langlöchern verschiebbar sind und mit Hilfe von Spannelementen festgelegt werden. Dabei ist auch vorgesehen, an Stelle von rollenartigen Führungsbauteilen eine vorgekrümmte Profilschiene zu benutzen, die der vorbestimmten Felgenkrümmung entspricht.

Die bekannte Konstruktion wird dadurch in der Herstellung als auch in der Anpassung an unterschiedliche Krümmungsradien aufwendig und erfordert darüber hinaus besondere Maßnahmen für den Vorratsspulenwechsel, der beispielsweise nur dann vorgenommen werden kann, wenn das Gehäuse geöffnet wird.

Die Aufgabe der Erfindung besteht darin, die bekannte Vorrichtung sowohl konstruktiv als auch bezüglich ihrer Handhabung zu vereinfachen und dabei auf die Ausbildung von Führungs- bzw. Bleibandkrümmungsbahnen in Form von hintereinandergeschalteten, am Gehäuse befestigten Führungselementen ganz zu verzichten.

Das obige Ziel wird erfindungsgemäß dadurch erreicht, daß zwei solcher Vorratsspulen gegensinnig gewickelt und deckungsgleich aufeinanderliegend in einem Transportbehälter und unmittelbar unterhalb des Ablängmechanismus auf einer gemeinsamen Achse stehend drehbar angeordnet sind, die Bestandteil eines einen Standfuß aufweisenden Ständers ist, wobei der Bleigewichtsstrang einer der beiden Spulen direkt und ohne Berührung mit dem Ständer oder diesem zugeordneten Führungselementen mit der von der Vorratsspule ablaufenden Strangkrümmung in einen von zwei übereinanderliegenden Vorschubwalzen gebildeten Förderwalzenspalt geführt ist und die Krümmung des aus dem Förderwalzenspalt austretenden Bleigewichtsstrangs zur Anpassung an die verlangte Rad- oder Felgenkrümmung des Wuchtgewichtes durch Änderung der Lage der Förderwalzen in horizontaler oder vertikaler Richtung in bezug aufeinander einstellbar ist.

Erfindungsgemäß ist damit der Aufbau der Vorrichtung so getroffen, daß die Krümmung des von der Vorratsspule abgespulten Bleigewichtsstrang unmittelbar genutzt wird zur Erzeugung der für das Rad bzw. die Felge verlangten Wuchtgewichtskrümmung - also ohne vorherige Geraderichtung des Stranges - und zwar innerhalb eines Förderwalzenspaltes, bei dem gemäß vorteilhafter Ausgestaltungen des Erfindungsvorschlags sowohl die Weite als auch der Anpreßdruck der beiden Förderwalzen an die Oberfläche des Bleigewichtsstrangs einstellbar sind, wobei wenigstens eine der beiden Förderwalzen mittels eines Handrades von Hand drehbar ist und die Vorratsspule oder Vorratsspulen nicht in einem Gehäuse, sondern auf einem Ständer innerhalb eines Transportbehälters angeordnet sind, der als auswechselbares Element kein besonderes Gehäuse benötigt, wobei er dadurch, daß er gewissermaßen beidseitig einsetzbar ist, als Träger zweier Spulen ausgebildet ist, die sich auf Grund ihrer gegensätzlichen Wicklung, ohne ihre Anordnung in diesem Behälter zu ändern, hintereinander abspulen lassen, um damit die Bleigewichtsstrangkapazität der Vorrichtung verdoppeln.

Weitere vorteilhafte Ausgestaltungen sind in den Unteransprüchen gekennzeichnet.

Die Erfindung wird nachfolgend anhand des in der Zeichnung dargestellten Ausführungsbeispiels näher erläutert. In der Zeichnung zeigen:
- Fig. 1: in schematischer Darstellung eine perspektivische Seitenansicht der Vorrichtung,
- Fig. 2: in schematischer Darstellung eine der Fig. 1 ähnliche perspektivische Seitenansicht der Vorrichtung, gesehen jedoch aus einem anderen Blickwinkel,
- Fig. 3: eine Teilrückansicht der Vorrichtung von Fig. 1 und Fig. 2 und

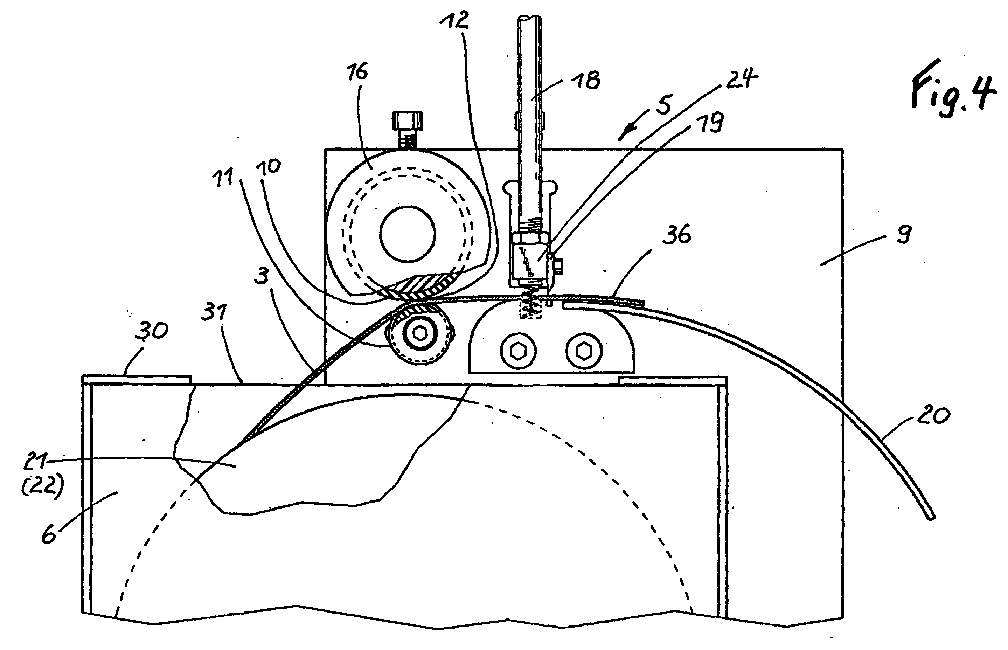

- Fig. 4: eine Teilvorderansicht der Vorrichtung von Fig. 1 und Fig. 2.

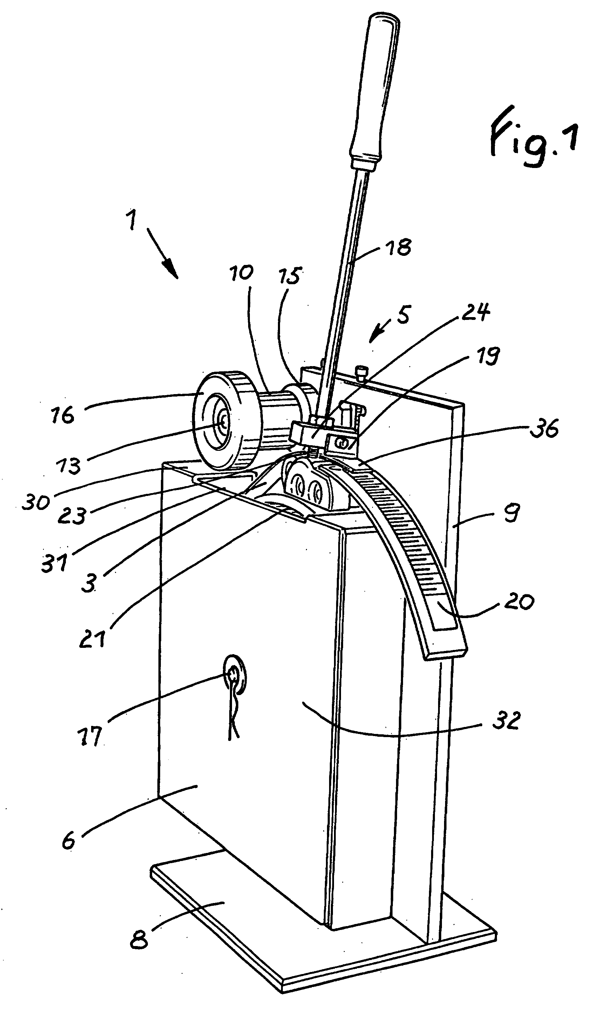

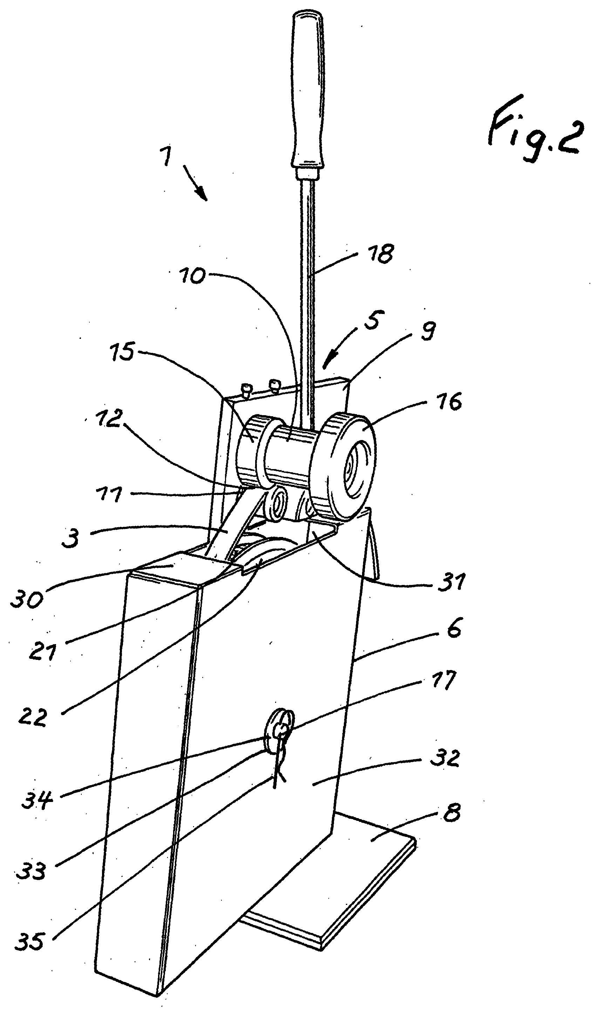

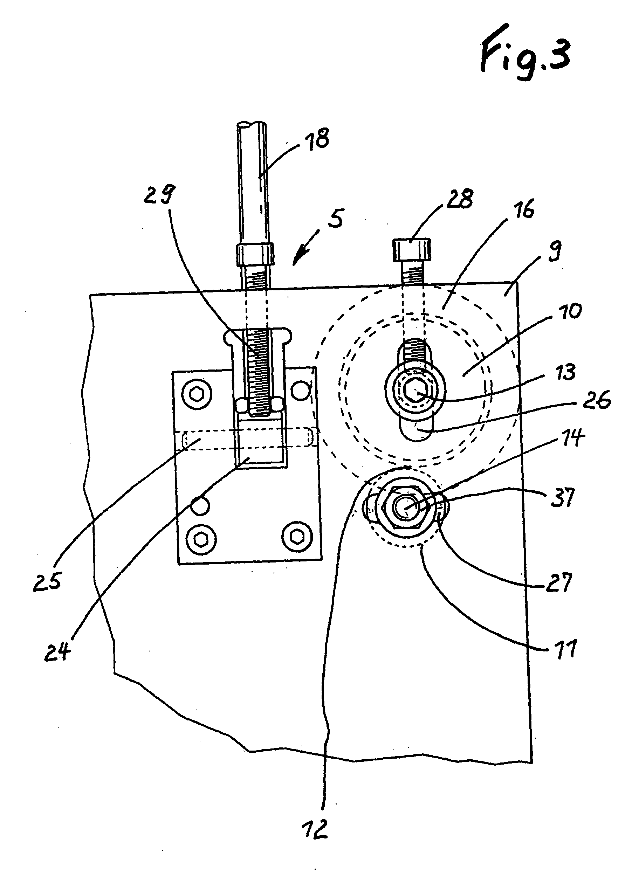

In den Figuren 1 und 2 ist die Ablängvorrichtung für Wuchtgewichte aus Blei oder dergleichen schweren Materialien, die zum Auswuchten von Kraftfahrzeugrädern oder Kraftfahrzeugfelgen dienen, ganz allgemein mit 1 bezeichnet. Diese Vorrichtung weist einen mit einem Standfuß 8 versehenen Ständer 9 auf, der einen Transportbehälter 6 in Form eines Pappkartons aufnimmt, welcher zwei Vorratsspulen 21, 22 für einen Bleigewichtsstrang 3 enthält, die gegensinnig gewickelt und deckungsgleich aufeinanderliegend bzw. nebeneinanderstehend in diesem Transportbehälter angeordnet sind und sich unmittelbar unterhalb eines Ablängmechanismus 5 auf einer gemeinsamen Achse 17 stehend angeordnet sind, so daß sie sich um diese gemeinsame Achse drehen können, um das Bleigewichtsband 3 mit derjenigen Krümmung in einen über ihnen angeordneten Walzenspalt zu liefern, der in Fig. 3 mit 12 bezeichnet ist. Dieser Förderwalzenspalt 12 wird von zwei Vorschubwalzen 10 und 11 gebildet, die auf waagrechten Achsen 13 und 14, welche am Ständer 9 angebracht sind, drehbar gelagert sind.

Die Krümmung des aus dem Förderwalzenspalt austretenden Bleigewichtsstrangs 3 läßt sich durch die Lageänderung der Förderwalze in bezug aufeinander an die verlangte Rad- oder Felgenkrümmung des Wuchtgewichtes 36 anpassen. Hierzu dienen Längsschlitze 26, 27 im plattenförmigen Ständer 9 in Verbindung mit den Achsen 13, 14 der Vorschubwalzen 10,11.

Die Weite des Förderwalzenspaltes 12 sowie der Anpaßdruck der beiden Förderwalzen 10, 11 an die Oberfläche des Bleigewichtsstrangs 3 sind dadurch einstellbar, daß die Achsen 13 und 14 in einem senkrechten bzw. einem waagrechten Längsschlitz innerhalb des Ständers 9 nach dem Lösen von Feststellschrauben 28, 29 bzw. 37 verstellt werden können, was bedeutet, daß die Achse 13 der Förderwalze 10 ein Höhenspiel im vertikalen Längsschlitz 26 und die Achse 14 der darunterbefindlichen Förderwalze 11 ein Seitenspiel im horizontalen Längsschlitz 27 hat, wie aus Fig. 3 ersichtlich.

Wie aus den Figuren 1 und 2 ersichtlich, weist die obere Förderwalze 10 einen die Oberflächenreibung mit dem Bleigewichtsstrang 3 beeinflussenden Belag 15 aus beispielsweise Gummi auf, während die untere Förderwalze 11 eine profilierte Oberfläche besitzen kann. Die obere Förderwalze 10 ist außerdem mit einem Handrad 16 versehen, mit Hilfe dessen diese Walze um ihre Achse 13 drehbar ist, um den Bleigewichtsstrang 3 aus der in der Schmalseite 30 des Transportbehälters 6 befindlichen Öffnung 31 herauszuführen und durch den Förderwalzenspalt 12 hindurchzufördern. Auf diese Weise gelangt der Bleigewichtsstrang 3 zu einem Ablängmechanismus 5, bestehend aus einem in dem Ständer 9 verschwenkbar gelagerten Handhebel 18, der an seinem unteren Ende ein Druckstück 24 ein Abkantmesser 19 aufweist, das mit dem Bleigewichtsstrang 3 nach dessen Durchtritt durch den Förderwalzenspalt 12 bei Verschwenken des Handhebels 18 in Eingriff bringbar ist, um das gewünschte Bleigewicht 36 von dem Strang zu trennen. Der sich in der Förderrichtung des Bleigewichtstrangs an das Abkantmesser 19 anschließende Teil des Ablängmechanismus ist, wie aus Fig. 1 ersichtlich, ein Längenmaßstab 20, der zum Abmessen der gewünschten Länge des Bleigewichts bzw. Auswuchtsgewichts 36 dient.

Wie aus der Zeichnung ersichtlich, ist die die beiden Vorratsspulen 21 und 22 aufnehmende Achse 17 im Ständer 9 in einem Abstand vom Standfuß 8 angebracht, der wenigstens so groß ist wie die Höhe des stehenden Transportbehälters 6, so daß dieser bequem unter den Förderwalzen 10, 11 angeordnet werden kann. Die Vorratsspulen 21, 22 sind zusammen mit dem Transportbehälter 6 auswechselbar derart, daß nach Entleerung der einen Spule 21 der Transportbehälter von der Spulenachse 17 genommen wird, um seine Hochachse um 180° gedreht wird und die volle andere, zur ersten Spule 22 gegenläufig gewickelte Spule 21 zur Lieferung des Bleigewichtsstrangs 3 in den Förderwalzenspalt 12 nutzbar gemacht wird.

Der Transportbehälter 6 für die Vorratsspulen, der die Form eines flachen Quaders aufweist und aus einem Pappkarton besteht bzw. einen aus einem anderen geeigneten Material bestehenden Kasten bildet, wird also zusammen mit den leeren Vorratsspulen von der Vorrichtung entfernt, nachdem der am Ende durch eine Öffnung 33 im Boden 32 des Transportbehälters hindurchtretenden Achse 17 befindliche Splint 35 von der Achse abgenommen worden ist und die Unterlegscheibe 34, wie aus Fig. 2 ersichtlich, die auf dem Boden 32 des Transportbehälters aufliegt, ebenfalls abgenommen wurde. Dieser entfernte, mit leeren Vorratsspulen bestückte Transportbehälter wird danach gegen einen solchen mit vollen Vorratsspulen ausgetauscht und zur erneuten Bestückung mit vollen Vorratsspulen abtransportiert.

Auf Grund dieser Anordnung der Vorratsspulen 21 und 22 ist quasi ein doppelter Bandvorrat gegeben, der durch bloßes Wenden des die Spulen aufnehmenden Behälters 6 nutzbar gemacht werden kann, wobei die ganze Konstruktion der Ablängvorrichtung nicht viel größer ist als die Spulen 21, 22 für den Bleigewichtsstrang 3 selbst. Die Tatsache, daß die Krümmung des Bleigewichtstrangs beim Verlassen der Spulen unmittelbar ausgenutzt wird, um in dem einstellbaren Förderwalzenspalt 12 die gewünschte endgültige Krümmung des Auswuchtgewichtes zu erzeugen und das Gewicht durch Ablängen in der gewünschten Länge herzustellen, die Ablängvorrichtung sowohl gewichtsmäßig als auch größenmäßig vergleichsweise kleine Werte aufweist, die ihren Einsatz beispielsweise in jeder Reifenwerkstatt und ihre schnelle Ortsveränderung ohne großen Aufwand ermöglicht.

## Patentansprüche

1. Ablängvorrichtung für Wuchtgewichte aus Blei oder dergleichen schweren Materialien zum Auswuchten von Kraftfahrzeugrädern oder -felgen, mit wenigstens einer Vorratsspule (21,22) für einen Bleigewichtsstrang (3) und einem mit einer Längenmeßskala (20) versehenen Mechanismus zum Ablängen des gewünschten Wuchtgewichtes von dem Strang, **dadurch gekennzeichnet, daß** zwei solcher Vorratsspulen (21, 22) gegensinnig gewickelt und deckungsgleich aufeinanderliegend in einem Transportbehälter (6) und unmittelbar unterhalb des Ablängmechanismus (5) auf einer gemeinsamen Achse (17) stehend drehbar angeordnet sind, die Bestandteil eines einen Standfuß (8) aufweisenden Ständers (9) ist, daß der Bleigewichtsstrang (3) einer der beiden Spulen (21, 22) direkt und ohne Berührung mit dem Ständer (9) oder diesem zugeordneten Führungselementen mit der von der Vorratsspule (21, 22) ablaufenden Strangkrümmung in einen von zwei übereinanderliegenden Vorschubwalzen (10, 11) gebildeten Förderwalzenspalt (12) geführt ist, und daß die Krümmung des aus dem Förderwalzenspalt (12) austretenden Bleigewichtsstrangs (3) zur Anpassung an die verlangte Rad- oder Felgenkrümmung des Wuchtgewichtes durch Änderung der Lage der Förderwalzen (10, 11) in horizontaler und vertikaler Richtung in bezug aufeinander einstellbar ist.

2. Ablängvorrichtung nach Anspruch 1, **dadurch gekennzeichnet, daß** die Weite des Förderwalzenspaltes (12) einstellbar ist.

3. Ablängvorrichtung nach Anspruch 1 oder 2, **dadurch gekennzeichnet, daß** der Anpreßdruck der beiden Förderwalzen (10, 11) an die Oberfläche des Bleigewichtsstrangs (3) einstellbar ist.

4. Ablängvorrichtung nach einem der Ansprüche 1 - 3, **dadurch gekennzeichnet, daß** die Krümmung des aus dem Förderwalzenspalt (12) austretenden Bleigewichtsstrangs (3) durch Verstellung der Achsen (13, 14) der Förderwalzen (10, 11) in bezug aufeinander einstellbar ist.

5. Ablängvorrichtung nach einem der Ansprüche 1 - 4, **dadurch gekennzeichnet, daß** wenigstens eine der beiden Förderwalzen (10, 11) mit einem die Reibung auf der Oberfläche des Bleigewichtsstrangs (3) beeinflussenden Belag (15) versehen ist.

6. Ablängvorrichtung nach Anspruch 5, **dadurch gekennzeichnet, daß** der Belag (15) aus Gummi besteht.

7. Ablängvorrichtung nach einem der Ansprüche 1 - 6, **dadurch gekennzeichnet, daß** eine der beiden Förderwalzen (10, 11) eine profilierte Oberfläche aufweist.

8. Ablängvorrichtung nach einem der Ansprüche 1 -7, **dadurch gekennzeichnet, daß** wenigstens eine der beiden Förderwalzen (10, 11) mit Hilfe eines Handrades (16) von Hand drehbar ist.

9. Ablängvorrichtung nach einem der Ansprüche 1 - 8, **dadurch gekennzeichnet, daß** die Achsen (13, 14) der beiden Förderwalzen (10, 11) in dem Ständer (9) angebracht sind.

10. Ablängvorrichtung nach einem der Ansprüche 1-9, **dadurch gekennzeichnet, daß** die die Vorratsspule oder -spulen (21, 22) aufnehmende Achse (17) im Ständer (9) in einem Abstand vom Standfuß (8) angebracht ist, der wenigstens so groß ist wie die Höhe des stehenden Transportbehälter (6).

11. Ablängvorrichtung nach einem der Ansprüche 1 - 10, **dadurch gekennzeichnet, daß** der Transportbehälter (6) für die Vorratsspulen (21, 22) auf dem Standfuß (8) des Ständers (9) anordbar ist.

12. Ablängvorrichtung nach einem der Ansprüche 1 - 11, **dadurch gekennzeichnet, daß** die Vorratsspulen (21, 22) zusammen mit dem Transportbehälter (6) auswechsselbar sind derart, daß nach Entleerung der einen Spule (21) der Transportbehälter (6) von der Spulenachse (17) nehmbar und um seine Hochachse um 180° drehbar ist und die volle andere, zur ersten Spule (22) gegenläufig gewickelte Spule (21) zur Lieferung des Bleigewichtstrangs (3) in den Förderwalzenspalt (12) nutzbar ist.

13. Ablängvorrichtung nach einem der Ansprüche 1 - 12, **dadurch gekennzeichnet, daß** der Ablängmechanismus (5) zu seiner Betätigung einen Handhebel (18) aufweist.

14. Ablängvorrichtung nach Anspruch 13, **dadurch gekennzeichnet, daß** der Handhebel (18) an dem Ständer (9) verschwenkbar gelagert ist.

15. Ablängvorrichtung nach einem der Ansprüche 1 - 14, **dadurch gekennzeichnet, daß** der Ablängmechanismus (5) einen mit dem Bleigewichtsstrang (3) durch Betätigung des Handhebels (18) in Eingriff bringbares Abkantmesser (19) aufweist.

16. Ablängvorrichtung nach einem der Ansprüche 1 - 15, **dadurch gekennzeichnet, daß** der Transportbehälter (6) für die Vorratsspulen (21, 22) ein Karton oder Kasten ist, der zusammen mit den leeren Vorratsspulen von der Vorrichtung entfembar und gegen einen solchen mit vollen Vorratsspulen (21, 22) austauschbar ist.

## Claims

1. Cutting device for balancing weights of lead or similar heavy materials for balancing of motorvehicle wheels or motorvehicle rims, provided with at least one store coil (21, 22) for a lead weight track (3) as well as with means for cutting off the requested balancing weight from the track having a widths measurement scale, **characterizing in that** two such store coils (21, 22) are coiled up in opposite directions and arranged in coincidence one over the other within a transport container (6) as well as rotatably mounted in a standing position directly below the cutting device on a common axis (17) which is part of a pillar (9) provided with a supporting foot (8), which lead weight track (3) of one of the two coils (21, 22) is directly fed into a feeding roll gap (12) without touching the pillar (9) or guiding elements related thereto, which feeding roll gap is formed of two shifting rolls (10, 11) arranged one over the other guiding the track running from the store coil (21, 22) and provided with a track curvature in accordance with the store coil, the construction being such that the curvature of the lead weight track (3) leaving the feed roll gap (12) is adjustable for adaption of the balancing weight to the required curvature of the wheel or rim by changing the position of the feed rolls (10, 12) in horizontal and vertical directions with respect to one another.

2. Cutting device according to claim 1, **characterized in that** the widths of the feeding roll gap (12) is adjustable.

3. Cutting device according to claim 1 or 2, **characterized in that** the contact pressure of the two feeding rolls (10, 11) against the surface of the lead weight track (3) is adjustable.

4. Cutting device according to one of claims 1 - 3, **characterized in that** the curvature of the lead weight track (3) exceeding from the feeding roll gap (12) is adjustable by adjusting the axis (13, 14) of the feeding rolls (10, 11) with respect to one another.

5. Cutting device according to one of the claims 1 - 4, **characterized in that** at least one of the two feeding rolls (10, 11) is provided with a cover (15) changing the friction of the surface of the lead weight track (3).

6. Cutting device according to claim 5, **characterized in that** the cover (15) consists of rubber.

7. Cutting device according to one of the claims 1 - 6, **characterized in that** one of the two feeding rolls (10, 11) is provided with a profiled surface.

8. Cutting device according to one of the claims 1 - 7, **characterized in that** at least one of the two feeding rolls (10, 11) is rotatable by means of a hand wheel (16).

9. Cutting device according to one of the claims 1 - 8, **characterized in that** the axes (13, 14) of the two feeding rolls (10, 11) are connected to the pillar (9).

10. Cutting device according to one of the claims 1 - 9, **characterized in that** the axis (17) supporting the store coil or store coils (21, 22) at the pillar (9) is arranged in a distance from the supporting foot (8) which is at least as large as the height of the standing transport container (6).

11. Cutting device according to one of the claims 1 - 10, **characterized in that** the transport container (6) for the store coils (21, 22) can be positioned on the supporting foot (8) of the pillar (9).

12. Cutting device according to one of the claims 1 - 11, **characterized in that** the store coils (21, 22) are together with the transport container (6) exchangable such that after one coil (21) has been cleared and the transport container (6) can be taken from the axis (17) of the coil and is turned about 180° around its vertical axis so that the complete other coil being coiled in contrary direction to the first coil (22) can be used for delivering the lead weight track (3) into the feeding roll gap (12).

13. Cutting device according to one of the claims 1 - 12, **characterized in that** the cutting apparatus (5) is provided with a handle (18) for its operation.

14. Cutting device according to claim 13, **characterized in that** the handle (18) is pivotably mounted on the pillar (9).

15. Cutting device according to one of the claims 1 - 14, **characterized in that** the cutting apparatus (5) is provided with a knife (19) which can be brought in engagement with the lead weight track (3) by operation of the handle (18).

16. Cutting device according to one of the claims 1-15, **characterized in that** the transport container (6) for the store coils (21, 22) is a card board box or housing which can be removed together with the empty store coils from the device and can be exchanged by a respective box or housing provided with complete store coils (21, 22).

## Revendications

1. Dispositif permettant de couper à longueur des masselottes d'équilibrage en plomb ou en matériau lourd du même type, destinées à équilibrer des roues ou des jantes de véhicules, comprenant au moins une bobine d'approvisionnement (21, 22) destinée à un cordon de masselottes en plomb (3), et un mécanisme, équipé d'une échelle de mesure de longueur (20), servant à couper à longueur la masselotte d'équilibrage souhaitée, à partir du cordon de masselottes, **caractérisé en ce que** deux bobines d'approvisionnement (21, 22) de ce type sont enroulées en sens inverse, montées de façon coïncidente et superposée dans un récipient de transport (6), et montées, directement sous le mécanisme de découpe à longueur (5), verticales et tournantes sur un axe commun (17), qui fait partie d'un support (9) présentant un pied d'appui (8), **en ce que** le cordon de masselottes en plomb (3) de l'une des deux bobines (21, 22) est guidé, directement et sans contact avec le support (9) ou des éléments de guidage qui lui sont associés, avec la courbure de cordon qui sort de la bobine d'approvisionnement (21, 22), dans un interstice entre rouleaux d'entraînement (12) formé par deux rouleaux d'avancement (10, 11) superposés, et **en ce qu'**il est possible de régler la courbure du cordon de masselottes en plomb (3) qui sort de l'interstice entre rouleaux d'entraînement (12) afin de l'adapter à la courbure de la roue ou de la jante, en modifiant la position des rouleaux d'entraînement (10, 11) l'un par rapport à l'autre, dans la direction horizontale et verticale.

2. Dispositif permettant de couper à longueur selon la revendication 1, **caractérisé en ce que** la largeur de l'interstice entre rouleaux d'entraînement (12) est réglable.

3. Dispositif permettant de couper à longueur selon la revendication 1 ou 2, **caractérisé en ce qu**'il est possible de régler la pression d'appui des deux rouleaux d'entraînement (10, 11) sur la surface du cordon de masselottes en plomb (3).

4. Dispositif permettant de couper à longueur selon l'une des revendications 1 à 3, **caractérisé en ce qu'** il est possible de régler la courbure du cordon de masselottes en plomb (3) qui sort de l'interstice entre rouleaux d'entraînement (12) en déplaçant les axes (13, 14) des rouleaux d'entraînement (10, 11) l'un par rapport à l'autre.

5. Dispositif permettant de couper à longueur selon l'une des revendications 1 à 4, **caractérisé en ce qu'**au moins un des deux rouleaux d'entraînement (10, 11) est pourvu d'un revêtement (15) qui exerce une influence sur la friction sur la surface du cordon de masselottes en plomb (3).

6. Dispositif permettant de couper à longueur selon la revendication 5, **caractérisé en ce que** le revêtement (5) est constitué en caoutchouc.

7. Dispositif permettant de couper à longueur selon l'une des revendications 1 à 6, **caractérisé en ce que** l'un des deux rouleaux d'entraînement (10, 11) présente une surface profilée.

8. Dispositif permettant de couper à longueur selon l'une des revendications 1 à 7, **caractérisé en ce qu'** au moins l'un des deux rouleaux d'entraînement (10, 11) peut être tourné à la main à l'aide d'une manette.

9. Dispositif permettant de couper à longueur selon l'une des revendications 1 à 8, **caractérisé en ce que** les axes (13, 14) des deux rouleaux d'entraînement (10, 11) sont montés dans le support (9).

10. Dispositif permettant de couper à longueur selon l'une des revendications 1 à 9, **caractérisé en ce que** l'axe (17) qui reçoit la ou les bobine(s) d'approvisionnement (21, 22), dans le support (9), est placé à une distance du pied d'appui (8) qui est au moins égale à la hauteur du récipient de transport (6) vertical.

11. Dispositif permettant de couper à longueur selon l'une des revendications 1 à 10, **caractérisé en ce qu**'il est possible de placer le récipient de transport (6) destiné aux bobines d'approvisionnement (21, 22) sur le pied d'appui (8) du support (9).

12. Dispositif permettant de couper à longueur selon l'une des revendications 1 à 11, **caractérisé en ce que** les bobines d'approvisionnement (21, 22), avec le récipient de transport (6), sont interchangeables de telle sorte qu'une fois l'une des bobines (21) vidée, le récipient de transport (6) peut être retiré de l'axe de bobine (17) et tourné de 180° autour de son axe normal et qu'il est possible d'utiliser l'autre bobine (21) pleine, enroulée en sens inverse de la première bobine (22), pour fournir le cordon de masselottes en plomb (3) dans l'interstice entre rouleaux d'entraînement (12).

13. Dispositif permettant de couper à longueur selon l'une des revendications 1 à 12, **caractérisé en ce que** le mécanisme de découpe à longueur (5) présente un levier à main (18) permettant son actionnement.

14. Dispositif permettant de couper à longueur selon la revendication 13, **caractérisé en ce que** le levier à main (18) est monté pivotant sur le support (9).

15. Dispositif permettant de couper à longueur selon l'une des revendications 1 à 14, **caractérisé en ce que** le mécanisme de découpe à longueur (5) présente une lame chanfreineuse (19) qu'il est possible d'amener en contact avec le cordon de masselottes en plomb (3) en actionnant le levier à main (18).

16. Dispositif permettant de couper à longueur selon l'une des revendications 1 à 15, **caractérisé en ce que** le récipient de transport (6) destiné aux bobines d'approvisionnement (21, 22) est un carton ou une boîte qu'il est possible de retirer du dispositif en même temps que les bobines d'approvisionnement vides et d'échanger contre un récipient du même type garni de bobines d'approvisionnement (21, 22) pleines.
